# EUROPEAN PATENT APPLICATION

(11) **EP 4 610 067 A1**
(43) Date of publication of application: **03.09.2025**
(21) Application number: 23882876.8
(22) Date of filing: 30.08.2023
(51) Int. Cl.: B60F 3/00, B60L 50/60, B60L 15/20, B62K 13/00

(54) **AMPHIBIOUS BICYCLE**

(30) Priority: 24.10.2022 KR 20220137271
(71) Applicant: Kim, Young Ki, Busan 48234 (KR)
(72) Inventor: Kim, Young Ki, Busan 48234 (KR)
(74) Representative: Cabinet Chaillot
(86) International application number: PCT/KR2023/012864
(87) International publication number: WO 2024/090769

(57) **Abstract**

The present invention relates to an amphibious bicycle and, more specifically, to an amphibious bicycle characterized by comprising: a first floating means that is mounted to a front wheel frame rotating along with a handle and unfolds due to buoyancy upon entering water, thereby keeping the front wheel frame afloat; a second floating means that is mounted to a rear wheel frame and unfolds due to buoyancy upon entering water, thereby keeping the rear wheel frame afloat; a propulsion means that propels the amphibious bicycle forward when the amphibious bicycle enters water; and a steering means by which the amphibious bicycle can change direction while moving forward in water, wherein the amphibious bicycle can transition directly from traveling on land to entering and moving across water without any additional work or replacement or addition of components.

## Description

### Technical Field

The present invention relates to a bicycle, more specifically an amphibious bicycle that works on both land and water, so that if the amphibious bicycle works on land, it can be minimized in volume or width, whereas if it works on water, it can be maximized in buoyancy and propelling force, and while being travelling on land, the amphibious bicycle can directly enter water and move on water during a rider's riding, without any additional work or replacement or addition of components thereof.

### Background Art

In view of an exercise effect and an available space, generally, bicycles are modern people's useful machines for leisure activities or vehicles for their transportation.

To allow bicycles to freely work on both land and water, therefore, amphibious bicycles have been developed by many people in various ways.

An amphibious bicycle as a representative example of the amphibious bicycles is configured to have airbags mounted on both sides thereof or therearound, so that the amphibious bicycle can float on water, and further, as pedals operate to produce a propulsion force, the amphibious bicycle can move on water.

If the amphibious bicycle works on land, however, it works with the airbags mounted thereon, so that it is difficult to hold the center thereof well, thereby making it impossible to run.

Even though the amphibious bicycle runs, it is bulky in width to cause many inconveniences to pedestrians or other bicycle riders, and even if the airbags are spaced apart from the surface of ground, further, they may come into contact with the land and be thus damaged or broken, so that they cannot be used on water.

To convert a land running mode into an underwater running mode, besides, the amphibious bicycle has to stop, and next, additional devices are detached or added from or to the amphibious bicycle, which causes many inconveniences of the use of the amphibious bicycle.

Therefore, there is a need to develop an amphibious bicycle that is capable of working on both land and water, without any additional work or replacement or addition of components thereof during a rider's riding.

### Disclosure of the Invention

### Technical Problems

Accordingly, the present invention has been made in view of the above-mentioned problems occurring in the related art, and it is an object of the present invention to provide an amphibious bicycle that consists of a first floating means mounted on a front wheel frame in such a way as to be folded downwards on land and be unfolded to both sides thereof due to buoyancy on water and a second floating means mounted on a rear wheel frame, so that the amphibious bicycle can directly enter water and thus move on water during a rider's riding, without any additional work or replacement or addition of components thereof, while being travelling on land.

Further, it is another object of the present invention to provide an amphibious bicycle that is provided with a propulsion means having a plurality of rotary blades and motors on a rear wheel rotating by pedals, so that a propelling force is produced even on water.

### Technical Solutions

To accomplish the above-mentioned objects, according to the present invention, there is provided an amphibious bicycle including: a first floating means that is mounted onto front wheel frames rotating along with a handlebar and unfolds due to buoyancy when the amphibious bicycle enters water, thereby keeping the front wheel frame afloat; a second floating means that is mounted onto rear wheel frames and unfolds due to buoyancy when the amphibious bicycle enters water, thereby keeping the rear wheel frame afloat; a propulsion means that propels the amphibious bicycle forward when the amphibious bicycle enters; and a steering means with which the amphibious bicycle changes a direction when the amphibious bicycle enters water and thus moves forward on water, whereby the amphibious bicycle directly performs the transition from traveling on land to entering water and moving on water, without any additional work or replacement or addition of the components.

Further, the first floating means may include: first base frames (100) fixed to the front wheel frames; first supports (120) located on the first base frames (100) in such a way as to rotate up and down; first air bags (140) mounted on the first supports (120) in such a way as to rotate up and be thus unfolded due to buoyancy and to rotate down and be thus folded if the buoyancy is removed; and first hinge shafts (121) for connecting the first supports (120) to the first base frames in such a way as to allow the first supports (120) to have hinge rotations with respect to the first base frames.

The second floating means may include: second base frames (200) fixed to the rear wheel frames; second supports (220) located on the second base frames (200) in such a way as to rotate up and down; second air bags (240) mounted on the second supports (220) in such a way as to rotate up and be thus unfolded due to buoyancy and to rotate down and be thus folded if the buoyancy is removed; and second hinge shafts (221) for connecting the second supports (220) to the second base frames in such a way as to allow the second supports (220) to have hinge rotations with respect to the second base frames.

In this case, after the first airbags and the second airbags enter water, rotate to the outsides of the frames around the hinge shafts due to buoyancy, and are unfolded upwards, the undersides of the first airbags and the second airbags may be located lower than a seat (90) of the amphibious bicycle, while being located higher than a first central line (91) connecting centers of a front wheel and a rear wheel, so that if the amphibious bicycle floats on water due to the first airbags and the second airbags, the position of the surface of water may be lower than the seat, and the first central line may be located lower than the surface of water, thereby allowing the amphibious bicycle to be stably propelled after entering water.

Moreover, the propulsion means may include underwater motors (300) located at given positions of the rear wheel, rotary blades (320) connected to each underwater motor, a battery (340) for supplying power to the underwater motors, and a controller (360) for adjusting an amount of power supplied to the underwater motors to control rotary forces of the underwater motors, whereby the amounts of power supplied to the underwater motors are adjusted to control rotary forces of the underwater motors through the controller, thereby allowing the speed of the amphibious bicycle in water to be controlled.

If it is assumed that a line connecting the front wheel and the rear wheel is defined as a second central line (92) when viewed on top of the amphibious bicycle, the steering means may be mounted to allow blade shafts (321) to which the rotary blades (320) are coupled to have hinge movements, so that if the left and right sides with respect to the second central line (92) are defined around a rider of the amphibious bicycle, the rotary blades are arranged correspondingly to the second central line to allow the amphibious bicycle to go straight, the rotary blades are arranged toward the left side with respect to the second central line to allow the amphibious bicycle to turn left and then move, and the rotary blades are arranged toward the right side with respect to the second central line to allow the amphibious bicycle to turn right and then move.

Further, the underwater motors (300), the blade shafts (321) directly connected to the shafts of the underwater motors, and the rotary blades (320) coupled to one end of each blade shaft may constitute a motor module mounted on a motor bracket (400), and the motor bracket (400) may have hinge coupling with a coupling bracket (410) fixed to the frame of the amphibious bicycle, so that the motor bracket (400) has hinge movements to allow the rotary blades to be arranged toward the left or right side with respect to the second central line.

In this case, the motor bracket (400) may be coupled to the coupling bracket fixed to the frame of the amphibious bicycle by means of the third hinge shaft (430), and if the motor bracket is located to be divided into left and right portions with respect to the second central line, a first grip (440) may be connected to a given position of the left portion, while a second grip (450) is being connected to a given position of the right portion, so that the first grip is pulled toward the seat to allow the motor bracket to rotate in a clockwise direction with respect to the third hinge shaft, thereby permitting the rotary blades to be arranged toward the left side with respect to the second central line, and the second grip may be pulled toward the seat to allow the motor bracket to rotate in a counterclockwise direction with respect to the third hinge shaft, thereby permitting the rotary blades to be arranged toward the right side with respect to the second central line.

Further, the steering means may include a rotary frame (500) to which the handlebar (70) for controlling a central axis and direction of the front wheel is connected, and the rotary frame (500) may rotate the front wheel to left and right sides according to the left and right rotations of the handlebar.

The rotary frame may be divided into left and right portions with respect to the second central line (92), and a third grip (441) is connected to a given position of the left portion, while a fourth grip (451) is being connected to a given position of the right portion, the third grip (441) being connected to the first grip (440) or the second grip (450), and the fourth grip (451) being connected to the first grip (440) or the second grip (450), so that as the handlebar rotates to the left and right sides, the rotary frame rotates to the left and right sides, and as the rotary frame rotates to the left and right sides, the third grip and the fourth grip connected to the left and right portions of the rotary frame move forward and backward to allow the first grip and the second grip to move forward and backward, thereby rotating the motor bracket in clockwise and counterclockwise directions with respect to the third hinge shaft.

Further, a first string (443) may be provided to connect the third grip (441) located at the given position of the left portion of the rotary frame to the second grip (450) located at the given position of the right portion of the motor bracket.

A second string (453) may be provided to connect the fourth grip (451) located at the given position of the right portion of the rotary frame to the first grip (440) located at the given position of the left portion of the motor bracket.

If the rotary frame rotates in the clockwise direction, the third grip (441) may move forward to allow the first string (443) to move forward, and next, the second grip (450) may be pulled forward to allow the motor bracket to rotate in the counterclockwise direction with respect to the third hinge shaft, so that the rotary blades may be arranged toward the right side with respect to the second central line.

If the rotary frame rotates in the counterclockwise direction, the fourth grip (451) may move forward to allow the second string (453) to move forward, and next, the first grip (440) may be pulled forward to allow the motor bracket to rotate in the clockwise direction with respect to the third hinge shaft, so that the rotary blades are arranged toward the left side with respect to the second central line. Accordingly, the amphibious bicycle may move in the rotational direction of the rotary frame.

The first string (443) may cross the second string (453) at a given position through a crossing ring (460), and in this case, the first string and the second string may be crossingly fitted to the crossing ring.

Further, a first connector (445) may be located at one end of the first string (443), while a second connector (446) being located at the other end of the first string (443), and a third connector (455) may be located at one end of the second string (453), while a fourth connector (456) being located at the other end of the second string (453).

As a result, the first connector (445) may be connected to the third grip (441), the second connector (446) connected to the second grip (450), the third connector (455) connected to the fourth grip (451), and the fourth connector (456) connected to the first grip (440).

The first connector, the second connector, the third connector, and the fourth connector may have the shapes of detachable loops so that desirably, the first string and the second string may be detachably attached to them.

### Advantageous Effectiveness of the Invention

According to the embodiment of the present invention, the amphibious bicycle, which directly enters water and thus moves on water, without any additional work or replacement or addition of components thereof, while being travelling on land, consists of the first floating means mounted on the front wheel frame in such a way as to be folded downwards on land and be unfolded to both sides thereof due to buoyancy on water and the second floating means mounted on the rear wheel frame, so that the amphibious bicycle can travel on land and float on water, and while being travelling on land, the amphibious bicycle can directly enter water and thus move on water during the rider's riding, without any additional work or replacement or addition of components thereof. Further, the amphibious bicycle according to the present invention is provided with the propulsion means having the plurality of rotary blades and motors on the rear wheel rotating by pedals, so that a propelling force is produced even on water.

### Brief Description of Drawings

FIG. 1a is a front view showing an example of a first floating means of an amphibious bicycle according to the present invention.
FIG. 1b is a front view showing an example of a second floating means of the amphibious bicycle according to the present invention.
FIG. 2 is a plan view showing a state where airbags of the respective floating means of the amphibious bicycle according to the present invention operate.
FIG. 3 is a side view showing a propulsion means of the amphibious bicycle according to the present invention.
FIG. 4 is a plan view showing a steering means of the amphibious bicycle according to the present invention.
FIG. 5 is a plan view showing a state wherein the steering means and the propulsion means of the amphibious bicycle according to the present invention are connected to each other.

### Best Mode for Invention

Hereinafter, a desirable embodiment of the present invention will be disclosed in detail with reference to the attached drawings. Before the present invention is disclosed and described, it is to be understood that the disclosed embodiment is merely exemplary of the invention, which can be embodied in various forms. Those skilled in the art will envision many other possible variations within the scope of the present invention.

In the description, when it is said that one member is located above another member, it means that one member may come into contact with another member as well as yet another member may exist between the two members. In the description, the thicknesses of the films and regions of the components shown in the drawings may be magnified for the clarity and convenience of the description.

Terms, such as the first, the second, and the third, may be used to describe various elements, but the elements should not be restricted by the terms. The terms are used to only distinguish one element from the other element. For example, a first element may be named a second element without departing from the scope of the present invention. Likewise, a second element may be named a first element. A term 'and/or' includes a combination of a plurality of relevant and described items or any one of a plurality of related and described items.

An expression referencing a singular value additionally refers to a corresponding expression of the plural number, unless explicitly limited otherwise by the context. In this application, terms, such as "comprise", "include", or 'have'' are intended to designate those characteristics, numbers, steps, operations, elements, or parts which are described in the specification, or any combination of them that exist, and it should be understood that they do not preclude the possibility of the existence or possible addition of one or more additional characteristics, numbers, steps, operations, elements, or parts, or combinations thereof.

If it is determined that the detailed explanation on the well-known technology related to the present invention makes the scope of the present invention not clear, the explanation will be avoided for the brevity of the description.

According to an embodiment of the present invention, an amphibious bicycle, which directly enters water and thus moves on water, without any additional work or replacement or addition of components thereof, while being travelling on land, consists of a first floating means mounted on a front wheel frame in such a way as to be folded downwards on land and be unfolded to both sides thereof due to buoyancy on water and a second floating means mounted on a rear wheel frame, so that the amphibious bicycle can run on land and float on water, and while being travelling on land, further, the amphibious bicycle can directly enter water and thus move on water during a rider's riding, without any additional work or replacement or addition of components thereof. Further, an amphibious bicycle according to the present invention is provided with a propulsion means having a plurality of rotary blades and motors on a rear wheel rotating by pedals, so that a propelling force is produced even on water.

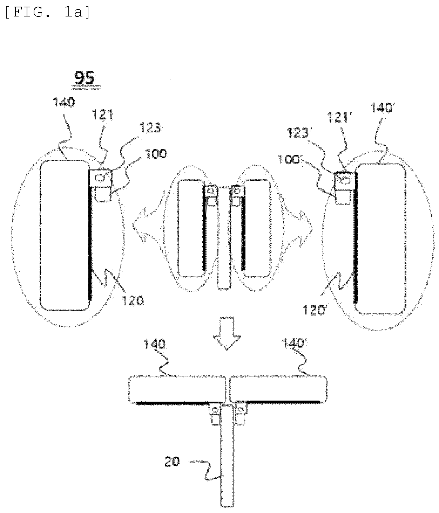

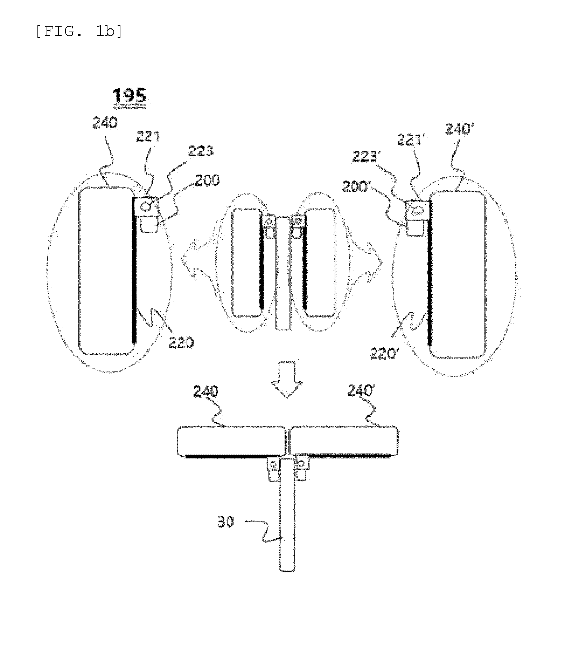

Hereinafter, an amphibious bicycle according to the present invention capable of directly entering water and thus moving on water, without any additional work or replacement or addition of components, while travelling on land, will be explained in detail with reference to FIGs. 1 to 5.

An amphibious bicycle according to the present invention includes a first floating means that is mounted onto a front wheel frame rotating along with a handlebar and unfolds due to buoyancy when the amphibious bicycle enters water, thereby keeping the front wheel frame afloat, a second floating means that is mounted onto a rear wheel frame and unfolds due to buoyancy when the amphibious bicycle enters water, thereby keeping the rear wheel frame afloat, a propulsion means that propels the amphibious bicycle forward when the amphibious bicycle enters, and a steering means with which the amphibious bicycle changes a direction when the amphibious bicycle enters water and thus moves forward on water.

As shown in FIGs. 1a and 1b, a first floating means and a second floating means operate on the same principle, and in detail, as shown in FIG. 1a, a first floating means 95 is configured to have first airbags 140 mounted on left and right sides of a front wheel 20 in such a way as to be unfolded to the outside from the front wheel 20 around first hinge shafts 121 mounted onto left and right sides thereof.

In the same way, as shown in FIG. 1b, a second floating means 195 is configured to have second airbags 240 mounted on left and right sides of a rear wheel 30 in such a way as to be unfolded to the outside from the rear wheel 30 around second hinge shafts 221 mounted onto left and right sides thereof.

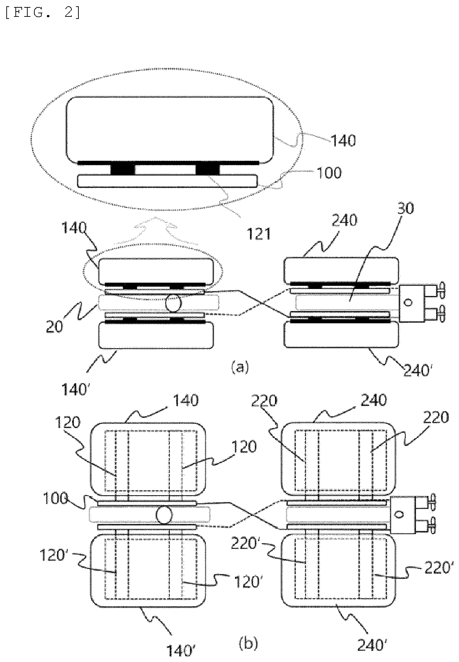

FIG. 2 is a plan view showing a state where the first floating means and the second floating means operate. On land, as shown in FIG. 2a, the airbags of the respective floating means are folded, but on water, as shown in FIG. 2b, the airbags are unfolded to the outside around the wheels due to buoyancy when the amphibious bicycle enters water, so that the amphibious bicycle floats on water.

In detail, the first floating means consists of first base frames 100 fixed to the front wheel frames, first supports 120 located on the first base frames 100 in such a way as to rotate up and down, the first air bags 140 mounted on the first supports 120 in such a way as to rotate up and be thus unfolded due to buoyancy and to rotate down and be thus folded if the buoyancy is removed, and first hinge shafts 121 for connecting the first supports 120 to the first base frames in such a way as to allow the first supports 120 to have hinge rotations with respect to the first base frames.

The second floating means consists of second base frames 200 fixed to the rear wheel frames, second supports 220 located on the second base frames 200 in such a way as to rotate up and down, the second air bags 240 mounted on the second supports 220 in such a way as to rotate up and be thus unfolded due to buoyancy and to rotate down and be thus folded if the buoyancy is removed, and second hinge shafts 221 for connecting the second supports 220 to the second base frames in such a way as to allow the second supports 220 to have hinge rotations with respect to the second base frames.

As shown in FIGs. 1 to 3, after the first airbags and the second airbags enter water, rotate to the outsides of the frames around the hinge shafts due to buoyancy, and are unfolded upwards, the undersides of the first airbags and the second airbags are located lower than a seat 90 of the amphibious bicycle, while being located higher than a first central line 91 connecting centers of a front wheel and a rear wheel, so that if the amphibious bicycle floats on water due to the first airbags and the second airbags, the position of the surface of water is lower than the seat, and the first central line is located lower than the surface of water, thereby allowing the amphibious bicycle to be stably propelled after entering water.

If the undersides of the first airbags and the second airbags are located lower than the first central line 91 in the state where the first airbags and the second airbags are unfolded, the amphibious bicycle may turn over, and if the undersides of the first airbags and the second airbags are located higher than the seat in the state where the first airbags and the second airbags are unfolded, a rider's hips may be located under the surface of water, so that it is hard to propel the amphibious bicycle and his or her body becomes wet to make the amphibious bicycle's movement inconvenient. Therefore, the undersides of the first airbags and the second airbags are located higher than the first central line 91 and lower than the seat in the state where the first airbags and the second airbags are unfolded, thereby preventing the amphibious bicycle from being inclined or turning over and ensuring the rider's pleasant riding.

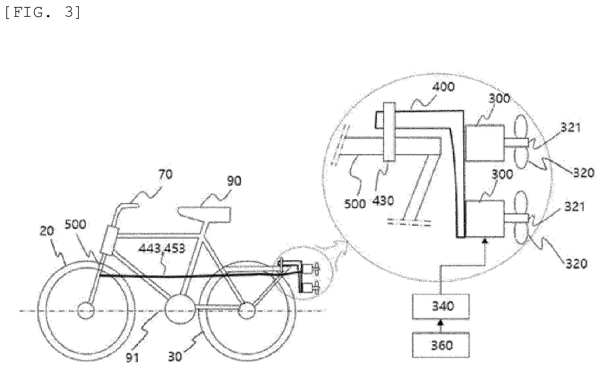

The propulsion means as shown in FIG. 3 includes underwater motors 300 located at given positions of the rear wheel, rotary blades 320 connected to each underwater motor, a battery 340 for supplying power to the underwater motors, and a controller 360 for adjusting an amount of power supplied to the underwater motors to control rotary forces of the underwater motors, so that the amounts of power supplied to the underwater motors are adjusted to control rotary forces of the underwater motors through the controller, thereby allowing the speed of the amphibious bicycle in water to be controlled.

In this case, the controller adjusts the intensity of power supplied to the underwater motors to allow the rotational speeds of the underwater motors to be varied, thereby controlling the speed of the amphibious bicycle, and further, the controller reversely changes the rotational directions of the underwater motors through changes in polarities of the battery or various methods, thereby allowing the amphibious bicycle to be reversed.

Further, a motor module, which consists of the underwater motors 300, blade shafts 321 directly connected to the shafts of the underwater motors, and the rotary blades 320 coupled to one end of each blade shaft, is mounted on a motor bracket 400, and as the motor bracket 400 has hinge movements by means of a third hinge shaft 430, the underwater motors 300, the blade shafts 321 directly connected to the shafts of the underwater motors, and the rotary blades 320 coupled to one end of each blade shaft have hinge movements integrally with one another.

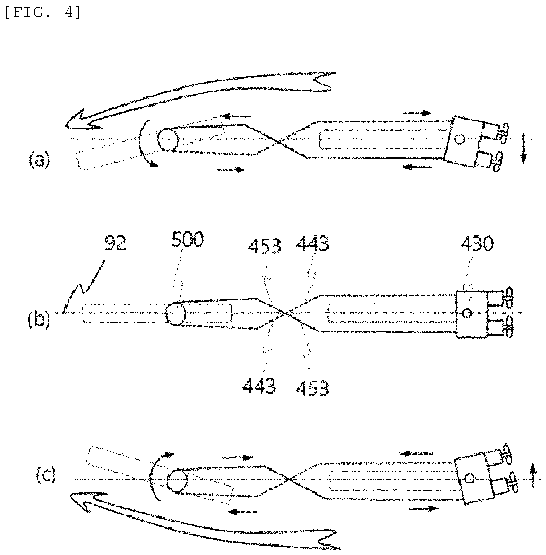

As shown in FIG. 4, if it is assumed that a line connecting the front wheel and the rear wheel is defined as a second central line 92 when viewed on top of the amphibious bicycle, the rotary blades 320 are located to have hinge movements through the third hinge shaft 430.

In this case, if the left and right sides with respect to the second central line 92 are defined around the rider of the amphibious bicycle, the rotary blades are arranged correspondingly to the second central line, as shown in FIG. 4b, so that the amphibious bicycle goes straight. Further, as shown in FIG. 4a, the rotary blades are arranged toward the left side with respect to the second central line (in FIG. 4, toward a lower portion with respect to the second central line), so that the amphibious bicycle turns left and then moves, and furthermore, as shown in FIG. 4c, the rotary blades are arranged toward the right side with respect to the second central line (in FIG. 4, toward an upper portion with respect to the second central line), so that the amphibious bicycle turns right and then moves. As a result, the amphibious bicycle steers under water to go straight, turn left, or turn right.

Further, the motor bracket 400 has hinge coupling to a coupling bracket 410 fixed to the frame of the amphibious bicycle by means of the third hinge shaft 430 in such a way as to have hinge movements, thereby allowing the rotary blades to be arranged toward the left or right side with respect to the second central line 92 of FIG. 3.

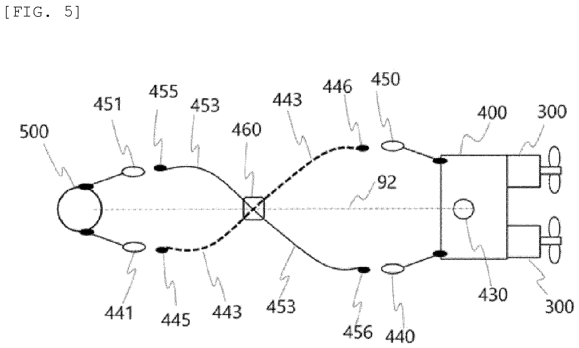

FIG. 5 is a plan view showing a state wherein the steering means and the propulsion means are connected to each other to allow the propulsion means to steer to propel the amphibious bicycle toward a desired direction.

In this case, the motor bracket 400 is coupled to the coupling bracket 410 fixed to the frame of the amphibious bicycle by means of the third hinge shaft 430, and if the motor bracket 400 is located to be divided into left and right portions with respect to the second central line 92, a first grip 440 is connected to a given position of the left portion, while a second grip 450 is being connected to a given position of the right portion. As a result, the first grip is pulled toward the seat to allow the motor bracket to rotate in a clockwise direction with respect to the third hinge shaft, thereby permitting the rotary blades to be arranged toward the left side with respect to the second central line. Further, the second grip 450 is pulled toward the seat 90 to allow the motor bracket to rotate in a counterclockwise direction with respect to the third hinge shaft, thereby permitting the rotary blades to be arranged toward the right side with respect to the second central line. So, the left and right directions of the rotary blades are controlled.

Further, as shown in FIG. 5, the steering means includes a rotary frame 500 to which the handlebar 70 for controlling a central axis and direction of the front wheel is connected, and the rotary frame 500 rotates the front wheel to left and right sides according to the left and right rotations of the handlebar.

In this case, the rotary frame 500 is divided into left and right portions with respect to the second central line 92, so that a third grip 441 is connected to a given position of the left portion, while a fourth grip 451 is being connected to a given position of the right portion.

In this case, the third grip 441 is connected to the second grip 450, and the fourth grip 451 is connected to the first grip 440, so that as the handlebar rotates to the left and right sides, the rotary frame rotates to the left and right sides. As a result, the third grip and the fourth grip connected to the left and right portions of the rotary frame move forward and backward.

As the third grip and the fourth grip move forward and backward in a horizontal direction with respect to the second central line 92, the first grip 440 and the second grip 450 move forward and backward to allow the motor bracket to rotate in clockwise and counterclockwise directions with respect to the third hinge shaft.

To do this, a first string 443 is provided to connect the third grip 441 located at the given position of the left portion of the rotary frame to the second grip 450 located at the given position of the right portion of the motor bracket, and a second string 453 is provided to connect the fourth grip 451 located at the given position of the right portion of the rotary frame to the first grip 440 located at the given position of the left portion of the motor bracket 400.

If the rotary frame 500 rotates in the clockwise direction, the third grip 441 moves forward to allow the first string 443 to move forward, and next, the second grip 450 is pulled forward to allow the motor bracket to rotate in the counterclockwise direction with respect to the third hinge shaft 430, so that the rotary blades are arranged toward the right side with respect to the second central line 92.

If the rotary frame 500 rotates in the counterclockwise direction, contrarily, the fourth grip 451 moves forward to allow the second string 453 to move forward, and next, the first grip 440 is pulled forward to allow the motor bracket 400 to rotate in the clockwise direction with respect to the third hinge shaft 430, so that the rotary blades are arranged toward the left side with respect to the second central line 92. Accordingly, the amphibious bicycle moves in the rotational direction of the rotary frame.

Further, as shown in FIG. 5, the first string 443 crosses the second string 453 at a given position through a crossing ring 460, and in this case, they are crossingly fitted to the crossing ring.

Further, a first connector 445 is located at one end of the first string 443, and a second connector 446 at the other end of the first string 443. Furthermore, a third connector 455 is located at one end of the second string 453, and a fourth connector 456 at the other end of the second string 453. As a result, the first connector 445 is connected to the third grip 441, the second connector 446 to the second grip 450, the third connector 455 to the fourth grip 451, and the fourth connector 456 to the first grip 440.

In this case, the first connector, the second connector, the third connector, and the fourth connector have the shapes of detachable loops so that desirably, the first string and the second string are detachably attached to them.

As described above, the amphibious bicycle according to the present invention works on both land and water, so that while traveling on land, the vehicle can enter water and thus move on water, without any additional work or replacement or addition of components thereof, and further, the amphibious bicycle according to the present invention is provided with the propulsion means having the plurality of rotary blades and motors on the rear wheel rotating by pedals, so that a propelling force is produced even on water.

The foregoing description of the embodiments of the invention has been presented for the purpose of illustration; it is not intended to be exhaustive or to limit the invention to the precise forms disclosed. Persons skilled in the relevant art can appreciate that many modifications and variations are possible in light of the above teachings. It is therefore intended that the scope of the invention be limited not by this detailed description, but rather by the claims appended hereto.

**[Explanations of Reference Numerals]**

| | | | |
|---|---|---|---|
| 10: | Amphibious bicycle | 20: | Front wheel |
| 30: | Rear wheel | 70: | Handlebar |
| 90: | Seat | 91: | First central line |
| 92: | Second central line | 95: | First floating means |
| 100: | First base frame | 120: | First support |
| 121: | First hinge shaft | 140: | First airbag |
| 195: | Second floating means | 200: | Second base frame |
| 220: | Second support | 221: | Second hinge shaft |
| 240: | Second airbag | 300: | Underwater motor |
| 320: | Rotary blade | 321: | Blade shaft |
| 340: | Battery | 360: | Controller |
| 400: | Motor bracket | 410: | Coupling bracket |
| 430: | Third hinge shaft | 440: | First grip |
| 441: | Second grip | 443: | First string |
| 445: | First connector | 446: | Second connector |
| 450: | Third grip | 451: | Fourth grip |
| 453: | Second string | 455: | Third connector |
| 456: | Fourth connector | 460: | Crossing ring |
| 500: | Rotary frame | | |

## Claims

1. An amphibious bicycle comprising:
a first floating means that is mounted onto front wheel frames rotating along with a handlebar and unfolds due to buoyancy when the amphibious bicycle enters water, thereby keeping the front wheel frames afloat;
a second floating means that is mounted onto rear wheel frames and unfolds due to buoyancy when the amphibious bicycle enters water, thereby keeping the rear wheel frames afloat;
a propulsion means that propels the amphibious bicycle forward when the amphibious bicycle enters; and
a steering means with which the amphibious bicycle changes a direction when the amphibious bicycle enters water and thus moves forward on water,
whereby the amphibious bicycle directly performs the transition from traveling on land to entering water and moving on water, without any additional work or replacement or addition of the components.

2. The amphibious bicycle according to claim 1, wherein the first floating means comprises:
first base frames (100) fixed to the front wheel frames;
first supports (120) located on the first base frames (100) in such a way as to rotate up and down;
first air bags (140) mounted on the first supports (120) in such a way as to rotate up and be thus unfolded due to buoyancy and to rotate down and be thus folded if the buoyancy is removed; and
first hinge shafts (121) for connecting the first supports (120) to the first base frames in such a way as to allow the first supports (120) to have hinge rotations with respect to the first base frames, and
the second floating means comprises:
second base frames (200) fixed to the rear wheel frames;
second supports (220) located on the second base frames (200) in such a way as to rotate up and down;
second air bags (240) mounted on the second supports (220) in such a way as to rotate up and be thus unfolded due to buoyancy and to rotate down and be thus folded if the buoyancy is removed; and
second hinge shafts (221) for connecting the second supports (220) to the second base frames in such a way as to allow the second supports (220) to have hinge rotations with respect to the second base frames.

3. The amphibious bicycle according to claim 2, wherein after the first airbags and the second airbags enter water, rotate to the outsides of the frames around the hinge shafts due to buoyancy, and are unfolded upwards, the undersides of the first airbags and the second airbags are located lower than a seat (90) of the amphibious bicycle, while being located higher than a first central line (91) connecting centers of a front wheel and a rear wheel, so that if the amphibious bicycle floats on water due to the first airbags and the second airbags, the position of the surface of water is lower than the seat, and the first central line is located lower than the surface of water, thereby allowing the amphibious bicycle to be stably propelled after entering water.

4. The amphibious bicycle according to claim 3, wherein the propulsion means comprises underwater motors (300) located at given positions of the rear wheel, rotary blades (320) connected to each underwater motor, a battery (340) for supplying power to the underwater motors, and a controller (360) for adjusting an amount of power supplied to the underwater motors to control rotary forces of the underwater motors, whereby the amounts of power supplied to the underwater motors are adjusted to control rotary forces of the underwater motors through the controller, thereby allowing the speed of the amphibious bicycle in water to be controlled.

5. The amphibious bicycle according to claim 4, wherein if it is assumed that a line connecting the front wheel and the rear wheel is defined as a second central line (92) when viewed on top of the amphibious bicycle, the steering means is mounted to allow blade shafts (321) to which the rotary blades (320) are coupled to have hinge movements, so that if the left and right sides with respect to the second central line (92) are defined around a rider of the amphibious bicycle, the rotary blades are arranged correspondingly to the second central line to allow the amphibious bicycle to go straight, the rotary blades are arranged toward the left side with respect to the second central line to allow the amphibious bicycle to turn left and then move, and the rotary blades are arranged toward the right side with respect to the second central line to allow the amphibious bicycle to turn right and then move.

6. The amphibious bicycle according to claim 5, wherein the underwater motors (300), the blade shafts (321) directly connected to the shafts of the underwater motors, and the rotary blades (320) coupled to one end of each blade shaft constitute a motor module mounted on a motor bracket (400), and the motor bracket (400) has hinge coupling with a coupling bracket (410) fixed to the frame of the amphibious bicycle, so that the motor bracket (400) has hinge movements to allow the rotary blades to be arranged toward the left or right side with respect to the second central line.

7. The amphibious bicycle according to claim 6, wherein the motor bracket (400) is coupled to the coupling bracket fixed to the frame of the amphibious bicycle by means of the third hinge shaft (430), and if the motor bracket is located to be divided into left and right portions with respect to the second central line, a first grip (440) is connected to a given position of the left portion, while a second grip (450) is being connected to a given position of the right portion, so that the first grip is pulled toward the seat to allow the motor bracket to rotate in a clockwise direction with respect to the third hinge shaft, thereby permitting the rotary blades to be arranged toward the left side with respect to the second central line, and the second grip is pulled toward the seat to allow the motor bracket to rotate in a counterclockwise direction with respect to the third hinge shaft, thereby permitting the rotary blades to be arranged toward the right side with respect to the second central line.

8. The amphibious bicycle according to claim 7, wherein the steering means comprises a rotary frame (500) to which the handlebar (70) for controlling a central axis and direction of the front wheel is connected, and the rotary frame (500) rotates the front wheel to left and right sides according to the left and right rotations of the handlebar, the rotary frame being divided into left and right portions with respect to the second central line (92), so that a third grip (441) is connected to a given position of the left portion, while a fourth grip (451) is being connected to a given position of the right portion, the third grip (441) being connected to the first grip (440) or the second grip (450), and the fourth grip (451) being connected to the first grip (440) or the second grip (450), whereby as the handlebar rotates to the left and right sides, the rotary frame rotates to the left and right sides, and as the rotary frame rotates to the left and right sides, the third grip and the fourth grip connected to the left and right portions of the rotary frame move forward and backward to allow the first grip and the second grip to move forward and backward so that the motor bracket rotates in clockwise and counterclockwise directions with respect to the third hinge shaft.
